# EUROPEAN PATENT APPLICATION

(11) **EP 2 108 572 A1**
(43) Date of publication of application: **14.10.2009**
(21) Application number: 09153854.6
(22) Date of filing: 27.02.2009
(51) Int. Cl.: B62D 63/06

(54) **Multi-purpose folding trailer**

(30) Priority: 09.04.2008 ES 200800734 U
(71) Applicant: TRAFFIC LINE, S.L.U., 08230 Barcelona (ES)
(72) Inventor: Solsona Peñarroya, Josep, 08230, Matadepera (ES)
(74) Representative: Pons Ariño, Angel

(57) **Abstract**

The present invention refers to a multi-purpose folding trailer (1), for transporting various articles, pulled by a towing vehicle. The object of the invention is a trailer that can be folded easily and practically so that it occupies the minimum space when it is not in use. Another aspect of the invention is that the trailer (1) can be adapted for transporting any type of load, such as two-wheeled vehicles.

## Description

### OBJECT OF THE INVENTION

The present invention refers to a multi-purpose folding trailer, for transporting various articles, pulled by a towing vehicle.

The object of the invention is a trailer that can be folded easily and practically so that it occupies the minimum space when it is not in use.

Another aspect of the invention is that the trailer can be adapted for transporting any type of load, such as two-wheeled vehicles.

### BACKGROUND OF THE INVENTION

In the state of the art, a multitude of trailers are known for transporting all types of articles, comprising a rolling chassis with a shaft for coupling and pulling behind a towing vehicle.

In particular, the same applicant is the title holder of utility model No. ES1061094U, referring to a trailer for two-wheeled vehicles, **characterised in that** the chassis has three horizontal platforms arranged transversally to the direction of the trailer's travel. The central platform is united to the chassis and the sides are articulated by means of hinges on the central platform by their longitudinal edges to enable folding. These platforms have a means of fixing two-wheeled vehicles and a means of distributing and equalising the weight on the trailer. The trailer described in the cited utility model has the drawback that when putting vehicles on it transversally with respect to the direction of travel, in spite of having means of fixing, they are unstable and therefore vulnerable to sudden changes in speed, such as for example unexpected braking and acceleration. Another drawback is that said trailer is not appropriate for transporting other types of loads.

### DESCRIPTION OF THE INVENTION

The multi-purpose folding trailer of the present invention resolves the problem described above enabling the transport of two-wheeled vehicles in a stable and safe way by means of a folding trailer that occupies the minimum space, which is suitable for transporting any type of load.

Specifically, the multi-purpose folding trailer comprises a rolling chassis furnished with a shaft for coupling and pulling behind a towing vehicle, **characterised in that** the chassis is divided into two parts, the front chassis part and the rear chassis part, articulated on the transverse axis close to the rolling axis of the trailer, where the rear chassis part is able to fold over the front part, with the front part extended to surpass the radius of wheels forming a supporting foot for the folded trailer when it is in a vertical position.

In the additional section of the front chassis part there is a lower cross-piece that supports the rear chassis part in the unfolded position, so that both chassis parts are completely co-planar, constituting a single surface for the load.

In order to lock the rear chassis part in a folded position, the multi-purpose folding trailer has a locking device, comprising a set of bolts, pulled by an activation cable, fitting into holes set in plates arranged on the additional section of the front chassis part in such a way that the holes coincide with the bolts in the folded position.

In order to facilitate the folding of the trailer, the articulation of the front and rear chassis parts is assisted by a set of pneumatic cylinders.

Also, the far free end of the rear chassis part is furnished with an articulated tray, assisted by pneumatic cylinders, carrying the registration plate of the vehicle and the rear lighting and indicating components, with this tray being in a vertical position when the trailer is unfolded.

The chassis, in both folded and unfolded positions is able to accommodate any accessory for transporting a specific load.

In particular, accessories for transporting two-wheeled vehicles comprise a series of channelled profiles arranged longitudinally on the unfolded chassis, forks for the insertion of the front wheel of the vehicle for fastening and an extendible collapsible ramp to enable raising the vehicle onto the trailer.

### DESCRIPTION OF THE FIGURES

To complement the description made and with the purpose of improving understanding of the characteristics of the invention and a preferred example of its practical embodiment, a set of figures accompanies the description as an integral part of it, where for the purpose of illustration and without limitation, the following are represented:
Figure 1 is a lateral elevation of the trailer showing it unfolded and ready to transport.
Figure 2 is a plan view of the trailer showing the axis of articulation of the front and rear chassis parts.
Figure 3 is a lateral elevation of the trailer, in this case in a folded position.
Figure 4 is a lateral elevation of the folded trailer, but in a vertical position to occupy minimum space.

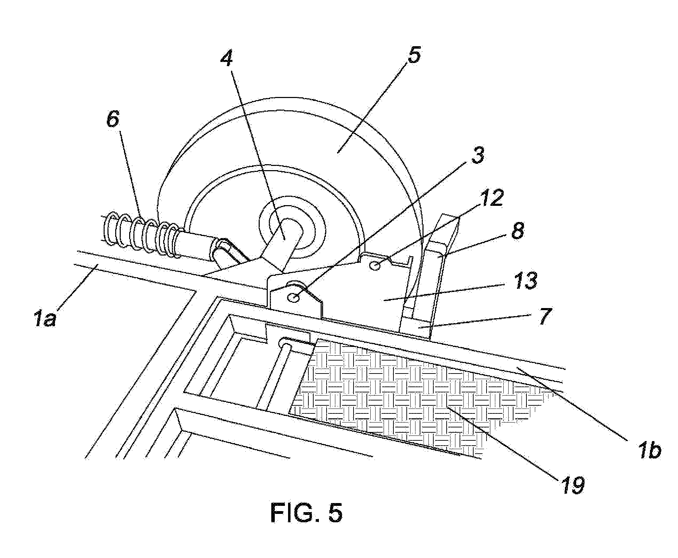

Figure 5 is a partial perspective view of the articulation zone of the chassis parts and the supporting foot for standing the trailer in a vertical position.
Figure 6 is a partial perspective view of the folded trailer, showing the locking mechanism.
Figure 7 is a partial perspective view of the unfolded trailer furnished with the accessories for transporting two-wheeled vehicles.

### PREFERRED EMBODIMENT OF THE INVENTION

Reviewing the figures, it can be seen that the multi-purpose folding trailer comprises a rolling chassis (1), furnished with a shaft (2) at the front end for its coupling and pulling behind a towing vehicle, with the chassis (1) divided into two parts, the front chassis (1a) and the rear chassis (1b), articulated on a transverse axis (3) close to the rolling axis (4) of the trailer. The front chassis part (1a) is furnished with the wheels (5) for its movement and the corresponding suspension components (6).

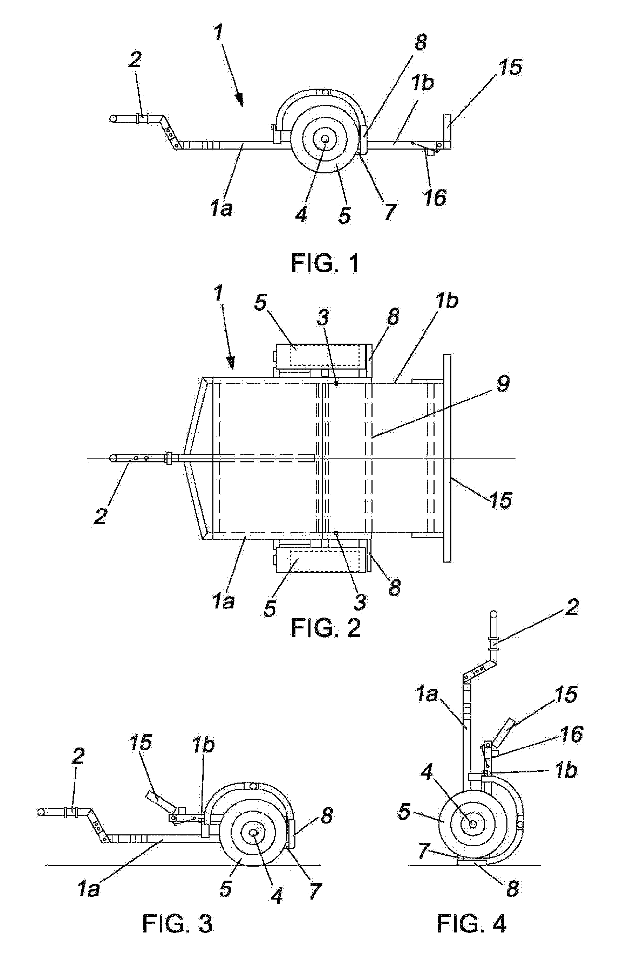

By means of this arrangement, the rear chassis part (1b) can be folded over the front chassis part (1a) around the transverse axis (3) so that the trailer occupies the least possible space when it is not in use. In order to place it in a vertical position once folded, the front chassis part (1a) continues in an additional section (7) that surpasses the radius of the wheels (5), to form a supporting foot (8), in such a way that the wheels (5) remain raised from the ground, as can be seen in figure 4.

So that the unfolded chassis (1) remains aligned in an unfolded position, the front chassis part (1a) has a lower cross-piece (9) to support the rear chassis part (1b), both parts becoming completely co-planar for use as a transport platform once the accessories for fixing and anchoring components have been deployed, which are explained below.

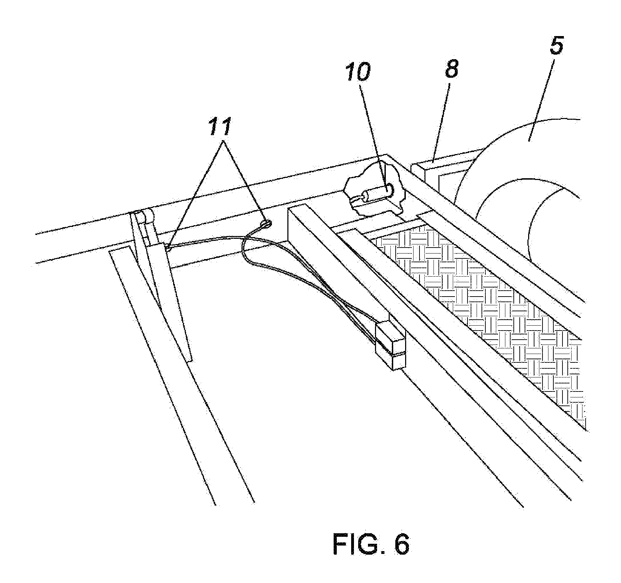

When the user wishes to fold the trailer, they need only raise and bring down the rear chassis part (1b) on the front chassis part (1a) and lock it in position, so that is remains folded when it is placed in a vertical position. Locking of the chassis parts (1a and 1b) in a folded position is achieved by means of a set of bolts (10) arranged transversally on the folding end of the rear chassis part, pulled by activation cables (11), as can be seen in Figure 6, fitting into a pair of holes (12) in plates (13) arranged on the additional section (7) of the front chassis part (1a), where the holes are arranged in a position to coincide with the bolts (10) when the trailer is folded. The axis or point of transverse articulation (3) is on these same plates (13), slightly elevated with respect to the rear chassis structure (1b).

The articulation between the front chassis (1 a) and the rear chassis (1 b) parts is assisted by a set of pneumatic cylinders (14) to facilitate folding and unfolding.

As this trailer is intended for travelling on public highways, it must comply with all the identification and signing requirements. For this purpose, the far end of the rear chassis part (1b) is furnished with an articulated tray (15), assisted by pneumatic cylinders (16), carrying the registration plate of the vehicle and the rear lighting and indicating components, with this tray (15) being in a vertical position when the trailer is unfolded. In the case when the trailer travels with the rear chassis part (1 b) folded, the tray (15) is manually moved to the rear part of the front chasses (1a) so that it can be seen correctly.

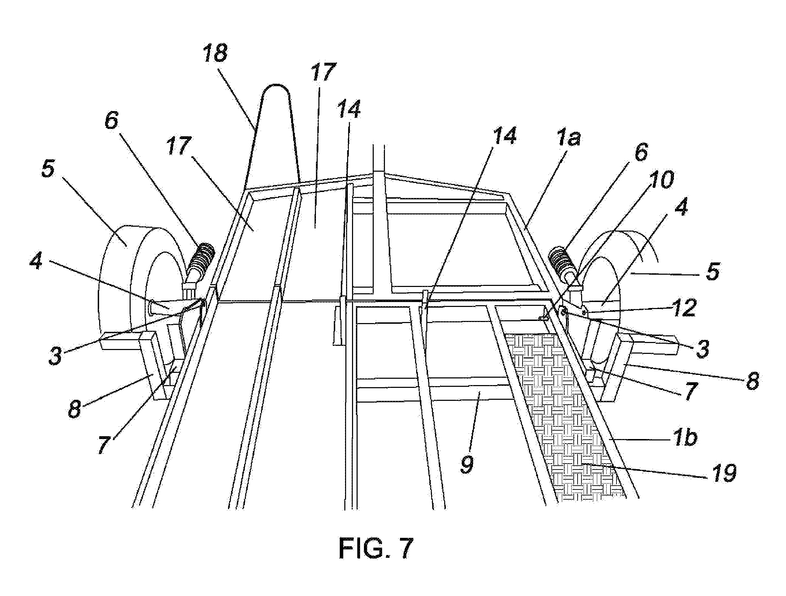

With the chassis (1) unfolded, any type of accessory can be installed, depending of the type of load to be transported. A simple perforated panel platform for transporting various articles or any other type of accessory for transporting a specific load can be fitted. In the example of embodiment shown in Figure 7, the accessories for transporting a two-wheeled vehicle have been fitted, comprising channelled metal profiles (17) arranged longitudinally on the unfolded chassis (1) and split by the transverse articulation axis (3), on which the vehicles to be transported are arranged. In order to keep them in a vertical position on the trailer and stabilise them in this position, the front end of the channelled metal profiles (17) is furnished with a fixing fork (18), in which the front wheel of the vehicle is inserted. Finally, to facilitate the raising of the two-wheeled vehicle on to the trailer, there is an extendible collapsible ramp (19), which remains hidden below the channelled profile (17) when in a resting posting.

## Claims

1. Multi-purpose folding trailer, comprising a rolling chassis (1) furnished with a shaft (2) for coupling and pulling behind a towing vehicle, **characterised in that** the chassis (1) is divided into two parts, the front chassis (1a) and the rear chassis (1b), articulated on a transverse axis (3) close to the rolling axis (4) of the trailer, where the rear chassis part (1b) is able to fold over the front part (1a), with the front part (1a) extended in an additional section surpassing the radius of the wheels (5) in an additional section (7) forming a supporting foot (8) for the folded trailer when it is in a vertical position.

2. Multi-purpose folding trailer according to claim 1, **characterised in that** the additional section (7) of the front chassis part (1a) has a lower cross-piece (9) on which the rear chassis part (1b) is supported in the unfolded position in such as way that both chassis parts (1a and 1b) are completely co-planar.

3. Multi-purpose folding trailer according to claim 1, **characterised in that** it has a device to lock the rear chassis part (1b) in a folded position.

4. Multi-purpose folding trailer according to claim 3, **characterised in that** this locking device comprises a set of bolts (10) pulled by an activation cable (11), fitting into a pair of holes (12) made in plates (13) arranged on the additional section (7) of the front chassis part (1a), and whose holes (12) are arranged to coincide with the bolts (10) in the folded position.

5. Multi-purpose folding trailer according to claim 1, **characterised in that** the articulation of the front (1a) and rear (1b) chassis parts is assisted by a set of pneumatic cylinders (14) to facilitate its folding.

6. Multi-purpose folding trailer according to claim 1, **characterised in that** the far end of the rear chassis part (1b) is furnished with an articulated tray (15), assisted by pneumatic cylinders (16), carrying the registration plate of the vehicle and the rear lighting and indicating components, with this tray (15) being in a vertical position when the trailer is unfolded.

7. Multi-purpose folding trailer according to claim 1, **characterised in that** the unfolded chassis (1) can be adapted to accommodate any accessory for transporting a specific load.

8. Multi-purpose folding trailer according to claim 7, **characterised in that** the accessories for transporting two-wheeled vehicles comprise a series of channelled profiles (7) arranged longitudinally on the unfolded chassis (1), forks (18) for the insertion of the front wheel of the vehicle for fastening and an extendible collapsible ramp (19) to enable raising the vehicle into the trailer.
